# EUROPEAN PATENT SPECIFICATION

(11) **EP 3 776 055 B1**
(45) Date of publication and mention of the grant of the patent: **02.12.2026**
(21) Application number: 19719151.3
(22) Date of filing: 11.04.2019
(51) Int. Cl.: G02B 21/08, G02B 21/36, H04N 23/10, H04N 1/48, H04N 23/56, H04N 23/88

(54) **APPARATUSES, SYSTEMS AND METHODS FOR GENERATING COLOR VIDEO WITH A MONOCHROME SENSOR**
VORRICHTUNGEN, SYSTEME UND VERFAHREN ZUR ERZEUGUNG VON FARBVIDEO MIT EINEM MONOCHROMEN SENSOR
APPAREILS, SYSTÈMES ET PROCÉDÉS DE PRODUCTION DE VIDÉO COULEUR À L'AIDE D'UN CAPTEUR MONOCHROME

(30) Priority: 12.04.2018 US 201862656720 P; 20.07.2018 US 201862701419 P
(43) Date of publication of application: 17.02.2021
(73) Proprietor: Life Technologies Corporation, Carlsbad, CA 92008 (US)
(72) Inventor: BERRETTA, Marc, Carlsbad, California 92008 (US); MECHAM, Jason, Carlsbad, California 92008 (US); METTING, Frank, Carlsbad, California 92008 (US); PAULLIN, Jonathan, Carlsbad, California 92008 (US); BOESCHOTEN, Paul, Carlsbad, California 92008 (US); PERSMARK, Erik, Carlsbad, California 92008 (US); ALTENDORF, Eric, Carlsbad, California 92008 (US)
(74) Representative: Stellbrink & Partner Patentanwälte mbB
(86) International application number: PCT/US2019/027013
(87) International publication number: WO 2019/200116

(56) References cited:
- JP-B2- 3 228 621
- US-A- 5 233 416
- US-A1- 2009 079 825
- US-A1- 2009 295 963
- US-A1- 2012 013 726
- US-A1- 2014 267 672
- ANONYMOUS: "B-Series BRIGHT-FIELD MICROSCOPE ILLUMINATORS", 26 October 2015 (2015-10-26), XP055597347, Retrieved from the Internet <URL:https://www.biovis.com/images/light_scopeled/Datasheet_B-Series_20151026.pdf> [retrieved on 20190618]
- ANONYMOUS: "Data Sheet: PCO.edge 5.5", 20 August 2013 (2013-08-20), XP055597339, Retrieved from the Internet <URL:https://www.pco.de/fileadmin/user_upload/db/download/BR_pco_edge55_102.pdf> [retrieved on 20190618]

## Description

### BACKGROUND

### Technical Field

The present application relates to microscopy apparatuses, systems and methods for generating videos. More particularly, the present application relates to apparatuses, systems and methods for generating color videos from a sequence of images captured with a monochrome sensor.

### Introduction

Microscopy is concerned with observing small, often microscopic, objects. Traditional microscopes incorporate a system of lenses to magnify, and thereby allow viewing of, such small objects. In an optical microscope, the system of lenses directs a magnified image of the small object to an eyepiece of the microscope while in a digital microscope, the image is focused on a camera or other image sensor. The camera records or relays image information, which can be rendered for display at a monitor or stored for later viewing. Such traditional microscopes are frequently large and expensive, and owing to the precision required to view microscopic objects, particularly with high resolution, the optics within most lens-based microscopes are delicate.

The cost and complexity of microscopes can be exacerbated as the microscope is outfitted to enable different types of imaging methods. For example, fluorescent microscopy is commonly used in research and clinical settings and can advantageously be used to identify the presence, absence, quantity, function, and localization of specific markers, structures, processes, or organelles within a cell or tissue sample. Microscopes enabled for fluorescence microscopy require a fluorophore excitation source, typically a laser, which adds to the complexity and cost of the microscope. Microscopes configured for fluorescence microscopy often use monochrome cameras to capture fluorescence images as monochrome cameras tend to provide a better contrast and a higher resolution than color cameras with a similar number of pixels and are often less expensive.

On the other hand, color cameras are useful for capturing color image data, which monochrome cameras are thus far incapable of doing. Color imaging data (e.g., images and video) are normally acquired using a white light source and color camera. In particular, white light is channeled evenly through a sample to a color camera which provides either raw image data or color image data to a display. White light emitting diodes (LEDs) are often used as light sources along with diffusers to provide an evenly lit sample. Mirrors are also often used to reflect the sample's image to the color camera's lens.

Image data captured by the color camera can be processed into a color image on the camera and transmitted, or it may be transmitted as raw data which is then processed into a color image by image processing software. Microscopes which collect both types of image data (*i.e.,* both monochrome and color image data) normally require both a monochrome and color camera. These microscopes are mechanically more complex, and the associated processes for controlling image capture are also more complex due to the need to control microscope configurations for each type of acquisition (e.g., controlling the movement of monochrome and color cameras into the sample light path, differential image data processing steps, etc.) Furthermore, many color cameras arrange pixels in a Bayer pattern or apply a Bayer mask to differentially receive and interpret red, green, and blue component light signals. This can reduce the overall camera sensitivity, particularly within the red channel, and may also produce unsatisfactory hues within resultant images.

The bulk, complexity, and expense of current microscope systems limit their utility. Accordingly, there is a need for microscope systems that are mechanically simpler and which provide opportunities for expanded use, among a number of additional problems and disadvantages in the field of image acquisition and processing that can be addressed. To this end, US 2009/079825 A1 discloses a pseudo-colour digital camera system comprising multiple light sources emitting different wavelengths, a monochrome digital camera, a digital-processing device and a switching device for synchronising the light sources with the camera. Images captured under the different wavelengths are assigned to colour channels and combined into a pseudo-colour composite image. In a video implementation, multiple frames are captured for every pseudo-colour frame displayed, so that the output video frame rate is a fraction of the native monochrome frame rate. US 5,233,416 A discloses sequential red/green/blue illumination using a rotary colour wheel. Picture signals corresponding to red, green and blue fields are stored in field memory, and renewed picture data of one colour are read out concurrently with previous field data of the other two colours and converted into concurrent video signals. Further, JP 3228621 B2 discloses an electronic endoscope apparatus using frame-sequential imaging in which R, G and B illumination light is sequentially applied to a subject, the subject is imaged by a CCD without a colour filter array, R, G and B signals are stored in respective memories, and the time-sequential colour signals are synchronously read out and converted into a video signal.

### BRIEF SUMMARY

Various embodiments disclosed herein are related to apparatuses, methods, and systems for generating color video with a monochrome camera. Such embodiments beneficially improve microscopy systems by, for example, simplifying the microscopy system, reducing the number of components and the overall size of microscopy systems, and reducing the cost of microscopy systems while maintaining essentially the same functionality.

A first aspect provides for a method for generating color video with a monochrome camera as defined by claim 1.

The disclosed methods for generating a color video with a monochrome camera can additionally include the act of assigning a color to the monochrome images based on the corresponding different wavelength of light at each stage of the sequence and compiling a sequence of video frames with each video frame including a composite color image. The composite color image includes a first monochrome image captured at a first stage of the sequence with a first wavelength of light, a second monochrome image captured at a second stage of the sequence with a second wavelength of light, and a third monochrome image captured at a third stage of the sequence with a third wavelength of light. Some methods may include the step of color balancing the color video by automatically or manually adjusting an intensity of the light sources, which in some instances, include the primary colors of light- a red light, a green light, and a blue light.

In an exemplary aspect, which does not fall under the scope of the claims, generating a color video includes compiling a first video frame and a second video frame. The composite color image of the first video frame includes a first monochrome image associated with a first wavelength of light in a first cycle of the sequence, a second monochrome image associated with a second wavelength of light in the first cycle of the sequence, and a third monochrome image associated with a third wavelength of light in the first cycle of the sequence. The second video frame, which is chronologically after the first video frame, is a composite color image that includes the second monochrome image, the third monochrome image, and a fourth monochrome image associated with a first wavelength of light in a second cycle of the sequence.

In some embodiments, methods for generating a color video with a monochrome camera can additionally include selectively generating a monochrome video of the sample (e.g., in response to a request). Generating the monochrome video can include compiling a plurality of monochrome images captured at the monochrome camera with a single light source into a series of monochrome video frames. The series of monochrome video frames comprises the monochrome video.

The methods disclosed herein can additionally enable the selection and viewing of monochrome images from the color/monochrome video.

Another aspect, which does not fall under the scope of the claims, provides an imaging apparatus or system for generating color video. The apparatus or system can include a light assembly having a plurality of light sources arranged about an optical axis of the light assembly. The light assembly can be configured to selectively energize the plurality of light sources in a sequence. The plurality of light sources can include, in an exemplary instance, a white light source, a red light source, a green light source, and a blue light source. The apparatus or system can additionally include a stage assembly configured to receive a biological sample within a light path of the light assembly, a monochrome camera disposed within the light path and configured to generate monochrome images corresponding to successive stages of the sequence, and an image processor in electrical communication with the monochrome camera. The image processor can be configured to receive the monochrome images at successive time points and compile the monochrome images into a plurality of video frames to generate a color video.

The disclosed imaging apparatuses or systems can additionally include a microscope objective aligned with the optical axis and a lens tube aligned with the optical axis. The imaging apparatus or system can additionally include a light barrel aligned with the optical axis and positioned so as to encircle the light assembly, the light barrel having a light diffuser positioned therein. The light barrel can additionally include a second light diffuser spaced apart from the light diffuser by a distance and a third light diffuser positioned adjacent the second light diffuser and spaced apart from the light diffuser by a second distance.

The disclosed imaging apparatuses or systems or components thereof can be incorporated into an apparatus or system for generating color video from monochrome images according to claim 12.

Additional features and advantages of the disclosure will be set forth in the description which follows, and in part will be obvious from the description, or may be learned by the practice of the disclosure. The features and advantages of the disclosure may be realized and obtained by means of the instruments and combinations particularly pointed out in the appended claims. These and other features of the present disclosure will become more fully apparent from the following description and appended claims, or may be learned by the practice of the disclosure as set forth hereinafter.

### BRIEF DESCRIPTION OF THE DRAWINGS

In order to describe the manner in which the above recited and other advantages and features of the disclosure can be obtained, a more particular description of the disclosure briefly described above will be rendered by reference to specific embodiments thereof, which are illustrated in the appended drawings. It is appreciated that these drawings depict only typical embodiments of the disclosure and are not therefore to be considered to be limiting of its scope. The disclosure will be described and explained with additional specificity and detail through the use of the accompanying drawings in which:
Figure 1 illustrates an example embodiment of a system incorporating features disclosed or envisioned herein;
Figure 2 illustrates a simplified schematic of lighting condenser and a camera with a sample disposed between the lighting condenser and the camera;
Figure 3 illustrates an assembled perspective view of an exemplary lighting condenser configured to illuminate a sample in a sequence;
Figure 4 illustrates a cross-sectional view of the lighting condenser of Figure 3;
Figure 5 is a schematic of one embodiment of a light assembly configured for use with lighting condensers disclosed herein and illustrates an exemplary configuration of electrical connections and light sources;
Figure 6 illustrates an exemplary wiring/communication diagram for coordinating sequential lighting and capture of monochrome images for generating a color video;
Figure 7A is a diagram that illustrates one embodiment for selecting images from a stream of monochrome images captured at a monochrome camera to form a sequence of color video frames that comprise a color video, which does not fall under the scope of the claims;
Figure 7B is a diagram that illustrates another embodiment for selecting images from a stream of monochrome images captured at a monochrome camera to form a sequence of color video frames that comprise a color video; and
Figure 7C is a diagram that illustrates yet another embodiment for selecting images from a stream of monochrome images captured at a monochrome camera to form a sequence of color video frames that comprise a color video, which does not fall under the scope of the claims.

### DETAILED DESCRIPTION

As used in the specification, a word appearing in the singular encompasses its plural counterpart, and a word appearing in the plural encompasses its singular counterpart, unless implicitly or explicitly understood or stated otherwise. Furthermore, it is understood that for any given component or embodiment described herein, any of the possible candidates or alternatives listed for that component may generally be used individually or in combination with one another, unless implicitly or explicitly understood or stated otherwise. Additionally, it will be understood that any list of such candidates or alternatives is merely illustrative, not limiting, unless implicitly or explicitly understood or stated otherwise. In addition, unless otherwise indicated, numbers expressing quantities, constituents, distances, or other measurements used in the specification and claims are to be understood as being modified by the term "about."

Accordingly, unless indicated to the contrary, the numerical parameters set forth in the specification and attached claims are approximations that may vary depending upon the desired properties sought to be obtained by the subject matter presented herein. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the subject matter presented herein are approximations, the numerical values set forth in the specific examples are reported as precisely as possible. Any numerical values, however, inherently contain certain errors necessarily resulting from the standard deviation found in their respective testing measurements.

Furthermore, as used in the specification and appended claims, directional terms, such as "top," "bottom," "left," "right," "up," "down," "upper," "lower," "proximal," "adjacent," "distal," and the like are used herein solely to indicate relative directions and are not otherwise intended to limit the scope of the specification or claims.

### Overview of Imaging Systems and Methods

Microscopes are tremendously useful tools that can be used to view and image small, often microscopic objects. However, the precise nature of microscopy requires a complex and expensive set of instruments. This is further complicated by the varying number and types of microscopy methods available, each of which require additional component. For example, a simple optical microscope can be modified with a camera that toggles the viewing area between an eyepiece and the camera lens to enable photographs or videos to be taken of a sample. In more complex methodologies such as fluorescence confocal microscopy, a digital microscope can be modified with lasers for exciting fluorophores present in a sample and with an automated motor for advancing the sample through a series of micrometer-thin z-sections. A digital camera (or other image sensor associated therewith) associated with the microscope synchronously captures image data at each of the z-sections. The image data is then processed by a computing system to create a three dimensional model of the sample. As used herein, a camera refers to any applicable image sensor compatible with the apparatuses, systems and methods described herein, including but not limited to charge-coupled devices, complementary metal-oxide-semiconductor devices, N-type metal-oxide-semiconductor devices, Quanta Image Sensors, combinations of the foregoing such as scientific complementary metal-oxide-semiconductor devices, and the like.

Designing a microscope to perform many of the commonplace microscopy methods can be cost prohibitive. Not only does each additional, specialized component require additional time and resources to obtain and successfully implement within an existing microscope, each additional component added onto the microscope increases the mechanical and operational complexity of the microscope. This increases the likelihood of a mechanical failure and can potentially make the microscope more difficult to use. Furthermore, many microscope components are operated by computer-executable instructions (e.g., a software application), and incompatibilities between various software applications can limit the combined use of retrofitted components or make them less efficient.

Most microscopes are configured to capture image data of a sample. For practical and economic reasons, many of these microscopes are coupled only (or primarily) to a monochrome camera-not to a color camera. Monochrome cameras enable capture of high resolution image data that can be used in a wide range of microscopy methods, but when color image data is desired or required, either the monochrome camera has to be substituted with a color camera or the user has to find a microscope specially equipped for capturing color image data. In either case, additional resources and time are required.

To overcome the limitations of prior art microscope systems, the systems and methods disclosed herein simplify microscopes by enabling acquisition of color image data from a monochrome camera. An exemplary method successively captures images of a sample illuminated in each of the primary light spectra (*i.e.,* the red, green, and blue (RGB) wavelengths) and compiles the images into a single image, thereby generating a color image of the sample using a monochrome camera. Importantly, the resultant color image is not a false-colored image obtained through image processing techniques; rather, each pixel of the compiled color image includes RGB intensity values (respectively obtained from the red, green, and blue monochrome images) as if the image was captured using a white light source. Further, by selectively energizing different light sources in a sequence and synchronizing image capture at a high frame rate, the image data captured by the monochrome camera can be used to generate a color video, including a real-time color video. For example, a first color video frame can be a compilation of the most recently captured RGB monochrome images. Upon capturing a newer (*i.e.,* a more recent) red, green, or blue monochrome image, a second color video frame can be compiled that replaces the outdated monochrome image with the newer monochrome image. This process continues as newer RGB monochrome images are captured, and concatenating the color video frames generated in this manner results in a color video.

Applications of this technology can be used to improve current microscope systems by allowing microscopes already outfitted with a monochrome camera to be modified, with the appropriate hardware and/or software changes, to acquire the ability to generate color image data, particularly color video, without the use of a color camera. By removing the need for a color camera while still enabling the generation of color image data, disclosed systems and methods reduce the cost and mechanical and operational complexities of microscope systems while expanding their utility-or at the very least not diminishing their functionality. Such a reduction in complexity can advantageously reduce the footprint of microscopes and reduce the likelihood of mechanical failures (*e.g*., less moving parts and less handling of microscope components results in less wear and a lower incidence of accidental damage), which can extend the lifetime use of microscopes and can do so at a lower operational cost.

Additionally, by utilizing a monochrome camera to generate color image data, microscopes become a more versatile and efficient tool. For example, such a microscope can switch from generating a color video to generating a monochrome video without necessitating a switch between different cameras or requiring an optical filter. Similarly, such a microscope can switch from generating a monochrome video to generating a color video without necessitating a physical switch between different cameras. This saves time and energy and allows for a more dynamic and responsive microscope.

Clearly, the systems and methods disclosed herein offer significant advantages over prior art microscopy systems and methods. Color cameras typically include an array of pixels that individually acquire one of the three component primary colors. This can be accomplished by evenly distributing component-specific pixels throughout the array, organizing the component-specific pixels in a pattern, or by overlaying a mosaic filter (*e.g.,* a Bayer filter) to ensure each pixel receives only single □color intensity information at given pixel locations. In each instance, the resolution with respect to each component primary color is less than the resolution of the entire array. Because each pixel of a monochrome camera records light information, a monochrome image will have a higher single-color resolution than a color image captured using a color camera that has the same number of pixels.

Also, because the color image data generated by the disclosed systems and methods is a compilation of monochrome components captured using a monochrome camera, each color image or color video frame can be a higher resolution image/video frame than that which would result from using a color camera that has a similar number of pixels as the monochrome camera. This increases the clarity and granularity of data that can be extracted from the image data over prior art microscopy systems and methods (*e.g*., high resolution single component images can be dissected from compiled image data) and additionally allows higher resolution color image data to be generated using a lower total pixel count camera-what has traditionally been a less expensive camera. Further, the unique coordination of light source illumination, image acquisition, and image processing described herein allows for the generation of color image data to take place at high frame rates, making a color video, including a real-time or near-real-time color video, representation of the sample possible.

Aspects of the disclosed systems and methods include image processing. Accordingly, embodiments disclosed or envisioned herein may comprise or utilize a special purpose or general-purpose computer including computer hardware, such as, for example, one or more processors, as discussed in greater detail below. Embodiments may also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments can comprise at least two distinctly different kinds of computer-readable media: computer storage media and transmission media.

Computer storage media includes RAM, ROM, EEPROM, CD-ROM or other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired and wireless) to a computer, the computer properly views the connection as a transmission medium. Transmission media can include a network and/or data links which can be used to carry data or desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (*e.g.,* an "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which cause a general-purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that embodiments may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, tablets, smart phones, routers, switches, and the like. Embodiments may be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices. Program modules for one entity can be located and/or run in another entities data center or "in the cloud."

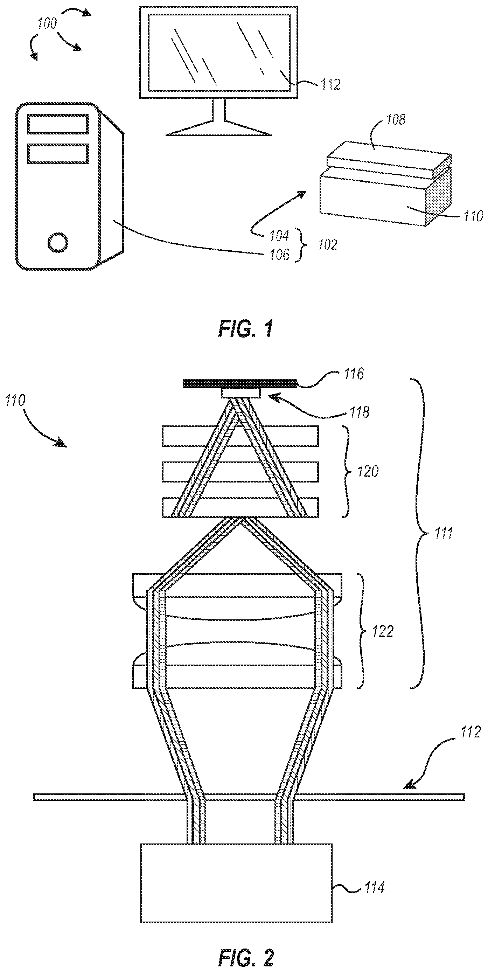

In this specification and in the following claims, a computer system is also defined to include imaging systems (*e.g*., imaging system 102 in Figure 1). Disclosed imaging systems can include special-purpose computers configured to capture a series of monochrome images and compile the images into a video. The video is preferably a color video generated from a stream of monochrome images, but the imaging system can additionally be configured to generate a monochrome video from the same or a different stream of monochrome images.

Figure 1 illustrates an exemplary system 100 incorporating features disclosed or envisioned herein. At the heart of the system 100 is an imaging system 102 in which samples, such as biological cells, are imaged and analyzed. The exemplary imaging system 102 includes, but is not limited to, an imaging device 104 and a computing device 106. The imaging device 104 includes a stage assembly 108 mounted within a microscope assembly 110. The stage assembly 108 is configured to house the components required to position a sample (such as, *e.g.,* a 96-well plate or a slide containing cells) so the microscope assembly 110 can image the cells. Within the imaging device 104 is a monochrome camera (*e.g*., monochrome camera 114 of Figure 2) configured to capture monochrome image data. In some embodiments, the monochrome camera is similarly positioned within the light path generated by the imaging device 104 and captures light transmitted through the sample.

In a general working example, components of the imaging system 102 are configured to communicate with the light assembly 116 and/or the monochrome camera 114 to control or coordinate the selective and cyclic energizing of light sources and corresponding capture of image data. For example, a computing device 106 can be in electrical communication with the light assembly 116 to control or direct any of when and which of a plurality of light sources are selectively energized, at what intensity, and for how long. The computing device 106 can additionally be in electrical communication with the monochrome camera 114 to instantiate or modify an image capture frequency or timing. The captured image data is further processed, as described below, to generate a color image and/or color video. In a preferred embodiment, the imaging system 102 synchronizes sample illumination and image acquisition-using the monochrome camera 114-at a high frame rate to generate a color video, including a real-time or near-real-time color video, of the sample.

As used herein, the term "video" or the like is intended to include the display of images at a frame rate equal to, or faster than, 6 frames per second. The frame rates for a video can include the display of images at 6, 7, 8, 9, 10, 12, 14, 16, 18, 20, 24, 30, 48, 50 or 60 frames per second, as well as all other rates in-between 6 and 60 frames per second and frame rates higher than 60 frames per second.

As used herein, the term "real-time color video" or the like is intended to include the nearly simultaneous acquisition, processing, and storage/display of a video representing the sample without any noticeable time lag or visual loss of image data. The term "near-real-time color video" or the like, as used herein, includes the acquisition, processing, and storage/display of a video representing a sample that includes a time lag or visual loss of image data. The time lag for a near-real-time video, as used herein, is less than 2-5 seconds, preferably less than 1 second, and more preferably, less than 0.5 seconds. The visual loss of data for a near-real-time video can include visual artifacts, such as color banding artifacts, a lack of color balancing, or similar, and in some embodiments, visual loss of data can be mitigated using image processing techniques described herein.

It should be appreciated that the computing device 106 can additionally be in electrical communication with other components of the imaging system 102, such as the microscope assembly 110 (*e.g.,* to change objective magnification) and/or the stage assembly 108 (*e.g.,* positioning and focusing a sample prior to, during, and/or after imaging).

With continued reference to Figure 1, the stage assembly 108 can be mounted on or otherwise be associated with the imaging device 104 and can include a positioning mechanism configured to retain and selectively move a sample for viewing by the imaging device 104, as known in the art. As it should be appreciated, the stage assembly 108 can be configured to move within any of three-dimensions, as known in the art. For example, the stage assembly 108 can be configured to move laterally (*e.g.,* in an x, y-plane transverse to a light path generated by the imaging device 104) to position different portions of the sample within the light path. The stage assembly 108 can additionally, or alternatively, be configured to move in a z-direction (*e.g*., between parallel x,y-planes that are each disposed at different distances from along the light path) using any mechanism known in the art, such as, for example, a stepper motor and screw/nut combination providing step-wise movements of the sample toward/away from a camera in increments down to 0.006 µm/microstep. It should be appreciated that the computing device 106 can additionally be in electrical communication with other components of the imaging system 102, such as the stage assembly 108 (*e.g*., positioning and focusing a sample prior to, during, and/or after imaging) and/or the microscope assembly 110 (*e.g.,* to change objective magnification).

Upon capturing image data at the camera, the data can be analyzed and/or stored locally at the imaging device 104 and/or in conjunction with the computing device 106. This can include, for example, compiling monochrome images into a composite color image/color video frame and/or generating a (color or monochromatic) video from the monochrome images. The computing device 106 can additionally be used as a controller for the system as well as for performing, by itself or in conjunction with imaging device 104, the analysis and/or storage of data obtained by imaging device 104. Computing device 106 can comprise a general purpose or specialized computer or server or the like, as defined above, or any other computerized device. Computing device 106 can communicate with imaging device 104 directly or through a network, as is known in the art. In some embodiments, computing device 106 is incorporated into the imaging device 104. In some embodiments, the computing device 106 is electronically coupled to the camera and light sources of the imaging device 104 to synchronize selectively energizing light sources with image acquisition.

System 100 can also include a user display device 112 to display results and/or system configurations. Imaging device 104 and/or computing device 106 can communicate, either directly or indirectly, with user display device 112 and can cause the monochrome and/or color image data to be displayed on the user display device 112. For example, the computing device 106 can generate a color video from monochrome images and display the color video on the display device. As should be appreciated, the generated video can be displayed as a real-time video or near-real-time video as it is generated by the computing device 106 or from a stored video file generated prior to being displayed.

In one embodiment, one or more of the method steps described herein are performed as a software application. However, embodiments are not limited to this and method steps can also be performed in firmware, hardware or a combination of firmware, hardware and/or software. Furthermore, the steps of the methods can exist wholly or in part on the imaging device 104, computing device 106, and/or other computing devices.

An operating environment for the devices of the system may comprise or utilize a processing system having one or more microprocessors and system memory. In accordance with the practices of persons skilled in the art of computer programming, embodiments are described below with reference to acts and symbolic representations of operations or instructions that are performed by the processing system, unless indicated otherwise. Such acts and operations or instructions are referred to as being "computer-executed," "CPU-executed," or "processor-executed."

### Exemplary Microscope Assemblies

As described above, the imaging system 102 can include a microscope assembly 110 as part of the imaging device 104. Illustrated in Figure 2 is a simplified schematic of a portion of an exemplary microscope assembly 110, namely lighting condenser 111. In simplified form, the lighting condenser 111 includes a light assembly 116, which is configured to selectively energize one or more light sources 118 to produce different wavelengths of light (*e.g.,* red, green, and blue wavelengths illustrated in Figure 2 as differentially hatched lines emanating from the light source 118), and one or more light diffusers 120 and one or more condenser lenses 122 to uniformly diffuse and focus the emitted wavelengths of light on a sample 109. As shown in Figure 2, light generated by the one or more light sources 118 is directed through one or more light diffusers 120 and one or more condenser lenses 122 of the lighting condenser 111 where it is focused on the sample 109. A monochrome camera 114 positioned in the light path created by the lighting condenser 111 captures light transmitted through the sample 109. Resulting monochrome images are compiled into color video frames that comprise a color video.

While the simplified illustration of a lighting condenser 111 in Figure 2 depicts three evenly spaced light diffusers 120 and a pair of condenser lenses 122, it should be appreciated that lighting condensers used within disclosed systems and methods for generating color videos using a monochrome camera can include any number and/or type of light diffusers 120 and condenser lenses 122. The lighting condenser can be configured based on the particular microscope or microscopy methodology, the wavelengths of light emitted by the light source 118, a desired outcome (*e.g*., uniform lighting of the sample), or for any other reason.

The number and positioning of light diffusers 120 and condenser lenses 122 within the lighting condenser 111 can affect, among other things, the uniformity of light illuminating the sample and can impact the resolution of monochrome images, individually, and the resolution and color balancing of a composite image, generally. Because monochrome images of differing wavelengths of light are compiled as the component channels of a color image, nonuniform illuminating light can cause color balancing issues within the resulting composite image. For example, nonuniform illumination of the sample using a first wavelength of light (*e.g.,* one of the primary colors of light, such as a red light) can result in a blotchy or graded monochrome image that misrepresents the actual intensity and distribution of color within the sample. This issue can be compounded if there is nonuniform illumination of the sample with a second and/or third wavelength of light (*e.g.,* the remaining primary colors of light-a green and/or blue light when the first wavelength of light is a red light), particularly if the nonuniform illumination of the second and/or third wavelength results in a different pattern of focused or graded light intensity than that generated by the first wavelength of light. In such a case, the resulting monochrome image from the second/third wavelength of light would fail to match the type of nonuniform illumination present in the monochrome image generated from the first wavelength of light, and when compiled, the intensity information informing each of the component channels of the color image would cause a skewed and discolored image compared to the actual coloring of the sample.

Accordingly, in some embodiments, the number and type of light diffusers 120 and condenser lenses 122, in addition to the spacing of each from the light source, sample, camera, and/or from each other, are selected so as to promote light scattering, mixing, and uniform illumination of the sample regardless of the wavelength of light used. This can beneficially provide more uniform monochrome images that, when compiled into a color image (whether for use as a color video frame in a color video or as an independent color image), result in an accurate reproduction of the sample with a good color balance. It can additionally reduce the amount of post-production image processing involved in generating a uniform, color balanced color video.

As used herein, an image of a sample has a "good" color balance when the colors in the image appear to have the same general appearance as the colors in the original sample. More particularly, neutral colors (*e.g*., greys and white) in the sample appear neutral in the reproduced image when the image has a "good" color balance. Additionally, or alternatively, non-neutral colors within the reproduced image can appear to have the same color (*e.g.,* the same hue, saturation, and/or brightness) as colors in the original sample when the image has a "good" color balance.

In some embodiments, the sample 109 is manipulated while the monochrome images are captured and the color video is generated. For example, the sample 109 can be manipulated with respect to its position by movement in one or more dimensions of stage assembly 108 on which sample 109 is positioned. Such manipulation of stage assembly 108 can include the movement of the stage assembly 108 (and correspondingly, sample 109) in one or more dimensions selected from the x, y and z dimensions. For example, stage assembly 108 can be moved in both the x and y dimensions as part of panning the field of view during the capture of the monochrome images and generation of the color video. These embodiments enable, for example, real-time or near-real-time color video while manipulating the sample such as panning the field of view in the x and y dimensions, adjusting the position of the sample in the z dimension, etc. In certain further embodiments, the real-time or near-real-time color video that is generated while the sample is manipulated is displayed on the user display device 112 while such manipulation occurs to enable a user to continue to view the generated and displayed video while continuing the manipulate the sample, which can, e.g., help guide the identification of one or more regions of interest to a user while they observe the displayed color video.

In some embodiments, the sample 109 is focused while the monochrome images are captured and the color video is generated. For example, the sample 109 can be manually focused by a user's adjustment of settings of imaging system 102, including settings of the microscope assembly 110 and/or the stage assembly 108 to adjust the focus of sample 109. Alternatively, sample 109 can be automatically focused, for example by autofocus software employed by computing device 106. These embodiments enable, for example, real-time or near-real-time color video while sample 109 is manually or automatically focused. In certain further embodiments, the real-time or near-real-time color video that is generated while the sample is focused is displayed on the user display device 112 while such focusing occurs, which can, e.g., help guide selection of the best focus for at least a region of interest that is being displayed.

In some embodiments, the generated video includes at least in part a z-stack video. Imaging system 102 can be configured to acquire a series of z-stack images, which can, e.g., show a region of interest while focusing at different levels (e.g., the middle of sample 109, the bottom of sample 109, the top of sample 109) or enable the generation of a composite image with a greater depth of field than the individually acquired images. In such embodiments, during the capture of such z-stack images, imaging system 102 can continue to provide color video. These embodiments enable, for example, real-time or near-real-time color video while z-stack images are obtained. In certain further embodiments, the real-time or near-real-time color video that is generated while the sample is focused is displayed on the user display device 112 while such focusing occurs, which can, e.g., help guide selection of z-stack settings (e.g., position settings, step size settings, depth of field setting, projection method settings, etc.).

In some embodiments, the monochrome images are captured and the color video is generated while one or more illumination conditions are adjusted. Imaging system 102 can allow for a variety of illumination conditions to be adjusted while still capturing the monochrome images and generating the color video. Non-limiting examples of illumination conditions that could be adjusted in such embodiments include adjusting one or more lighting condensers (e.g., lighting condenser 111), adjusting one or more light diffusers (e.g., light diffuser 120), adjusting a wavelength of the one or more light sources (e.g., by activating a different light source, by using a different excitation filter on a filter wheel, etc.), adjusting whether light is blocked from one or more of the one or more light sources 118, or adjusting whether light is revealed from one or more of the light sources 118. These embodiments enable, for example, real-time or near-real-time color video while one or more illumination conditions are adjusted. In certain further embodiments, the real-time or near-real-time color video that is generated while the one or more illumination conditions are adjusted is displayed on the user display device 112 while such adjustment occurs, which can, e.g., help guide the selection of the final illumination conditions for at least a region of interest that is being displayed.

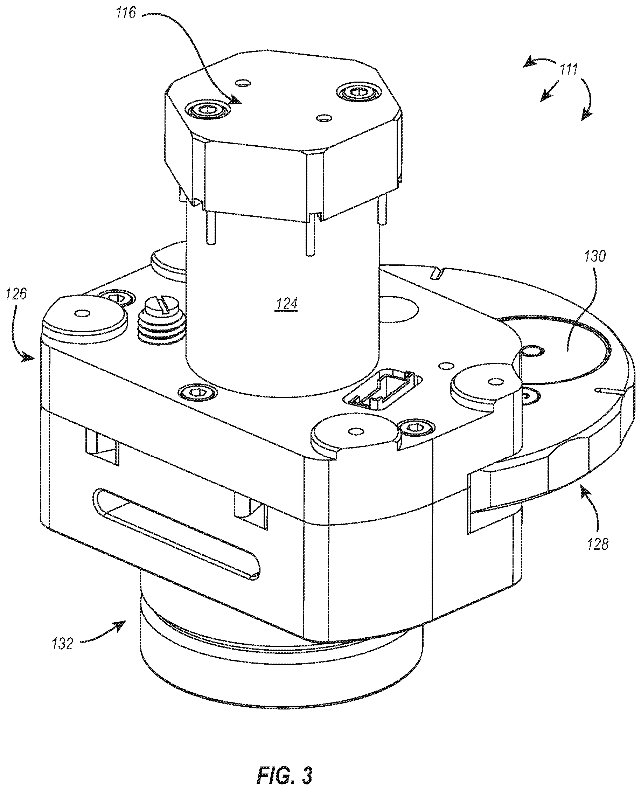

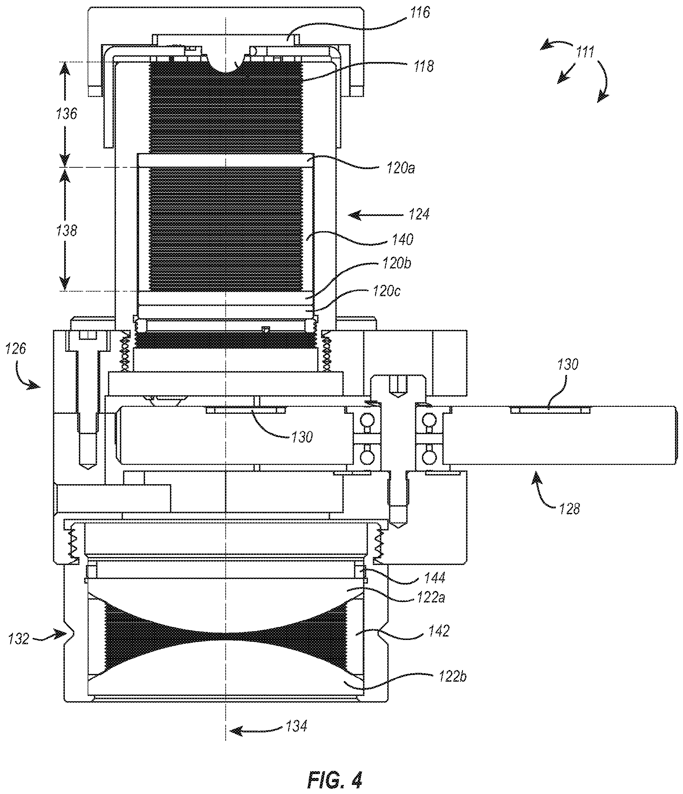

Figures 3 and 4 illustrate an exemplary embodiment of a lighting condenser 111 for use in systems and methods for generating a color image/video using a monochrome camera. Figure 3 illustrates an assembled perspective view of the exemplary lighting condenser 111, and Figure 4 illustrates a cross-sectional view of the lighting condenser 111 of Figure 3.

In the exemplary embodiment of Figures 3 and 4, the lighting condenser 111 includes a light assembly 116 disposed at a proximal end of a light barrel 124. A distal end of the light barrel 124 is coupled (*e.g.,* by threads, as shown, or by any other attachment mechanism known in the art) to a proximal end of the condenser body 126, which retains a phase wheel 128 therein and allows the phase wheel 128 to rotate any of a plurality of phase annuli 130 into position within the light path and/or about the optical axis to accommodate various microscopy methods. The phase wheel 128 and associated annuli 130 are configured for uses as known in the art and can be selected based on the desired microscopy method (*e.g.,* the phase wheel can incorporate objective-specific phase annuli to enable phase contrast microscopy or no annulus to enable bright field microscopy). The lighting condenser 111 of Figures 3 and 4 additionally includes a lens tube 132 coupled (*e.g.,* by threads, as shown, or by any other attachment mechanism known in the art) to a distal end of the condenser body 126. The lens tube 132 houses and retains a pair of condenser lenses 122a, 122b.

With respect to the light assembly 116 of lighting condenser 111, the light assembly 116 comprises a plurality of light sources 118 positioned about the optical axis 134 of the lighting condenser 111 and which are configured to be selectively energized to emit light within the light barrel 124. The emitted light passes through each of the three light diffusers 120a, 120b, and 120c disposed within the light barrel 124, and in doing so, the light intensity is homogenized over the light path and adequate color mixing occurs. As shown, the first light diffuser 120a is positioned a first distance 136 away from the light sources 118 and a second distance 138 away from the second light diffuser 120b. The first and second light diffusers 120a, 120b can be spaced apart using, for example, a spacer 140. The air gaps spanning the first and second distances 136, 138 can allow more chances for light scattering and mixing, which increases the overall illumination uniformity.

In one embodiment, the light barrel 124 can be assembled by first fixing a retaining ring at the distal end of the light barrel 124 followed by positioning the third light diffuser 120c adjacent the retaining ring and positioning the second light diffuser 120b adjacent the third light diffuser 120c. A spacer 140 can then be threadedly advanced within the light barrel 125 toward the distal end thereof until it abuts the second light diffuser 120b or otherwise secures the second light diffuser 120b within the light barrel 124. The first light diffuser 120a can subsequently be positioned adjacent the spacer 140 and on an opposite side of the spacer 140 than the second light diffuser 120b. In some embodiments the first light diffuser 120a is additionally fixed and/or retained within the light barrel 124 by a retaining ring (not shown) disposed on a proximal side of the first light diffuser 120a and opposite the spacer 140.

With continued reference to Figures 3 and 4, a non-limiting working example can include a light barrel 124 that is ~32 mm in diameter by ~53 mm in length with the first light diffuser 120a positioned ~14 mm from the light source 118, the second light diffuser 120b positioned ~19 mm from the first light diffuser 120a, and the third light diffuser 120c positioned adjacent to and touching the second light diffuser 120b. Additionally, the first and second light diffusers 120a, 120b can each comprise a 120 grit diffuser, and the third light diffuser 120c can comprise a 220 grit diffuser. In this (and other) embodiments, the light diffusers 120a, 120b, 120c are oriented so that the grit surface is facing away from the light source 118. This foregoing light barrel configuration, when assembled with a pair of condenser lenses 122a, 122b (*e.g.,* spaced no more than 80 mm away from the third light diffuser 120c), can beneficially produce good color mixing, intensity uniformity, and minimal pixel shifts between light channels.

Many of these benefits can be maintained with other configurations. For example, one or more of good color mixing, intensity uniformity, or minimal pixel shifts between light channels can be maintained in a light barrel that measures between 20 - 50 mm in diameter, preferably between 30 - 40 mm in diameter, and more preferably between about 32 - 35 mm in diameter and that measures between any of 10 - 100 mm in length, 30 - 80 mm in length, or 45 - 55 mm in length. In one embodiment, the length of the light barrel is limited to those lengths where the light sources are not conjugate to the sample plane with respect to the position of the condenser lenses within the lighting condenser.

Additionally, or alternatively, the first and second distances 136, 138 spacing the first light diffuser 120a from the light sources 118 and from the second light diffuser 120b, respectively, may be different (*i.e.,* greater or less) than as shown and provided in the non-limiting working example above. In some embodiments, it is possible that the first and/or second distances 136, 138 may be reduced without strongly impacting the performance of the lighting condenser.

Further, it should be appreciated that although the lighting condenser 111 is illustrated in Figures 3 and 4 as having three light diffusers 120a, 120b, 120c, in some embodiments, the lighting condenser includes greater or fewer light diffusers than those illustrated in Figures 3 and 4. Among other things, the number of light diffusers can affect color mixing, intensity uniformity, and the amount of drive current and optical power required per channel to replicate similar imaging conditions. In some embodiments, the presence of a third light diffuser significantly impacts the performance of the lighting condenser. For example, the presence of a third light diffuser can allow for good color mixing.

Accordingly, reducing the number of light diffusers may negatively impact color mixing and intensity uniformity but decrease the drive current and optical power per channel necessary to replicate the similar imaging conditions as the lighting condenser 111 of Figures 3 and 4. On the other hand, increasing the number of light diffusers may positively impact color mixing and intensity uniformity but increase the drive current and optical power per channel necessary to replicate similar imaging conditions. For example, a lighting condenser having a single light diffuser can use 1/10 - 1/30 the drive current and optical power to replicate imaging conditions similar to the lighting condenser 111 of Figures 3 and 4.

After the light passes through the lighting condensers and annuli (if any) of the phase wheel, it is directed to a pair of condenser lenses 122a, 122b. Similar to the light diffusers 120a, 120b discussed above, the condenser lenses 122a, 122b are associated with a lens tube 132 and positioned a distance apart by a spacer 142. The condenser lenses 122a, 122b can additionally be retained in a defined position relative to one another by a retaining ring 144. In one embodiment, the lens tube 132 and condenser lenses 122a, 122b are positioned within the lighting condenser 111 such that the light path is focused on the stage assembly, and more particularly on the sample associated therewith.

### Exemplary light assemblies

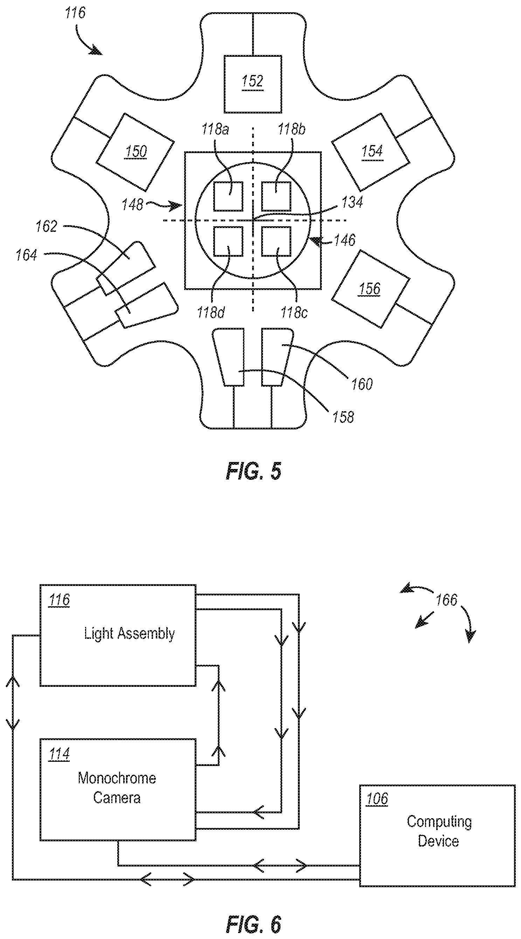

Light assemblies, such as light assembly 116 described above and depicted in more detail in Figure 5, are used in the disclosed systems and methods for generating a color image/video. The light assembly 116 is configured to selectively energize each of a plurality of light sources in a sequence. The sequence can be, for example, a cyclic sequence of the primary light colors RGB with each light source comprising a different color. In the exemplary embodiment shown in Figure 5, the plurality of light sources can comprise a multiple emitter LED package 148 with each color being a separate emitter/semiconductor die packaged together as an LED source. For example, the LED package 148 can include a red LED source 118a, a green LED source 118b, a blue LED source 118c, and a while LED source 118d positioned in quadrants about the center of the LED package. As a non-limiting example, the red LED source 118a is a 617 nm light, the green LED source 118b is a 530 nm light, and the blue LED source 118c is a 447.5 nm light.

In one embodiment, the center of the LED package 148 corresponds to the optical axis 134 of the lighting condenser 111. As can be seen in Figure 5, the LED package 148 can arrange the light sources in a generally circular pattern about the optical axis 134. In some embodiments, the LED package can include an additional light source positioned generally at the center of the generally circular pattern (not shown). For example, the additional light source can be positioned so that it is aligned along the optical axis 134 of the lighting condenser 111. During operation, each of the RGB LED sources is selectively energized, causing the sample to be illuminated in a red, green, or blue light. Because the RGB LED sources are not emitting light from the same position, there is a possibility that the resulting monochrome images will include pixel shifts between each of the RGB light channels. By positioning the RGB LED sources about the optical axis, the prevalence of pixel shifts is reduced. The intensity uniformity and color mixing enabled by passing the light emitted from the RGB LED sources through light diffusers (e.g., light diffusers 120a, 120b, and 120c of Figure 4) can additionally prevent or reduce artifacts that may arise from illuminating the sample from different angles.

In some embodiments, the plurality of light sources can additionally include a fluorophore excitation source configured to produce excitation light directed to the fluorophores within the sample being imaged and induce a fluorophore emission light therefrom. Such embodiments can enable fluorescence imaging of samples in addition to or separate from the color and monochrome imaging enabled by the disclosed systems. In some embodiments, the fluorescent images are incorporated into video frames to create a monochrome fluorescence imaging video or as an additional component within a color video. For example, a color video can be produced using RGB images, generating a background color image, and fluorescence peaks can be overlain on the image indicating the location and/or action of fluorescence objects within the images comprising the color video. Accordingly, the systems described herein can additionally include fluorescence imaging capabilities, whether incorporated as part of a color or monochrome video or as standalone monochrome fluorescence images/video.

In some embodiments, and as illustrated in Figure 5, a lens 146 can be disposed over the plurality of light sources 118a, 118b, 118c, 118d, which can act at the emitter origin to at least partially centralize and distribute the light path along the optical axis 134-thereby also acting to reduce artifacts that may arise from illuminating the sample from different angles.

With continued reference to Figure 5, the light assembly 116 includes a plurality of connection points 150, 152, 154, 156, 158, 160, 162, 164, as known in the art, for electrically coupling each LED source to a connector (not shown). Each LED source is associated with a pair of connection points (one corresponding to the positive terminal and one corresponding to the negative terminal). For example, the red LED source 118a can be associated with two adjacent connection points 150, 152, whereas the white LED source can be associated with two other connection points 162, 164. The location and positioning of connection points illustrated in Figure 5 can beneficially allow for better wire management, biasing wires away from grooved regions of the light assembly body, but the location and positioning can vary, as known in the art.

Importantly, in some embodiments, the LED sources of the light assembly 116 form part of an electrical switch. For example, wires terminating at the connection points can be coupled (*e.g.,* directly or via a connector) at an opposite end to a controller configured to selectively energize the LED sources in a sequence. This enables the LED sources to be individually and rapidly energized in a controlled manner, and in some embodiments, the controller selectively energizing the LED sources is also controlling or instructing a monochrome camera to capture image data in synchrony with sample illumination by the selectively energized LED sources.

An exemplary wiring/communication diagram 166 illustrating the foregoing is depicted in Figure 6. The diagram 166 shows the wiring between the light assembly 116 (*e.g.,* via an associated LED electronics board), a monochrome camera 114 and a computing device 106. The diagram 166 depicts three wires connected between the light assembly 116 and camera 114. These wires can utilize, for example, the camera's General Purpose Input Output (GPIO) connections. Line 1 represents an output from the camera 114 indicating a high level during frame exposure. A signal transition from high to low occurs as each frame exposure is completed, signaling the light assembly 116 to transition to the next color LED source in a predefined sequence (*e.g.,* a triplet cyclic sequence comprising one or a combination of RGB, RBG, GRB, GBR, BGR, or BRG). The sequence can proceed, for example, from red to green to blue and repeats as the camera continuously and/or synchronously captures images and signals the light assembly 116 through Line 1.

In the exemplary wiring/communications diagram 166, Lines 2 and 3 represent outputs from the light assembly 116 that indicate the current LED source being energized or simply the color of light being used for illumination. In one embodiment, these values can transition between the binary values of 1 (01), 2 (10), and 3 (11) to indicate Red, Green, and Blue, respectively, during color video display. During monochrome video and image capture Lines 2 and 3 can be binary 0 (00). Color information and optionally a timestamp or other time-related information associated with the LED source being energized when the image was captured can be associated with the acquired image within the camera 114, and this information is transmitted with the image data itself from the camera 114 (*e.g.,* via a USB connection) to the computing device 106. Alternatively, a timestamp can be associated with each acquired image based upon when it was received by the computing device 106. A color can be associated with each image based upon when it is received, or alternatively, a color can be determined for each received image based on a back-calculation of what light source was illuminated at the time the image was captured-based on the light source illumination sequence. Computer-executable instructions such as software that are stored on the computing device 106 accesses the color information to determine the illumination conditions of the particular monochrome image received.

Alternatively, the computing device 106 can query the monochrome camera 114 to determine the current GPIO line values (and thereby determine the image color) or communicate with the light assembly 116 to determine the current LED source illumination color. However, these methods are prone to timing errors, which could cause a misidentification of the illumination color of the current image being retrieved from the camera 114. For at least this reason, the former method of embedding the LED color illumination information within the image data itself may be preferred.

As provided above, a light assembly (*e.g*., light assembly 116 of Figure 5) can include a plurality of light sources positioned around the optical axis of a lighting condenser and configured to be selectively energized to emit light within the light barrel. In some embodiments, selectively energizing the light sources includes selectively blocking and revealing light originating from each of the plurality of light sources. For example, the light assembly can additionally include a disc proximate the plurality of light sources and configured to selectively block and reveal light originating from each of the plurality of light sources.

In one embodiment, the disc defines an aperture positioned relative to the light sources such that it reveals a single light source while blocking the remaining light sources. Rotating the disc about the optical axis can reveal other light sources and block the previously revealed light source. In such an exemplary embodiment, the plurality of light sources can remain in an energized state as oppose to cycling on and off, and the rotation of the aperture can act to allow individual light sources to shine on the sample. Furthermore, the rotating disc can be controlled by a computing device (*e.g*., similar to computing device 106 described above) to coordinate revealing each of the plurality of light sources with capturing images at the monochrome camera when each of the plurality of light sources illuminates the sample.

### Generating A Color Video From Monochrome Images

During operation of an imaging system configured to generate color images/video (or after acquiring and storing requisite image data), monochrome images are received together with LED source illumination information (as above). Color images are created by the computing device 106 by compiling red, green, and blue pixel data from each of the red, green, and blue monochrome images. Each pixel in a resulting color image includes the pixel data from the same pixel location within the red, green, and blue monochrome images. Adjustments may be made to the intensity of the individual red, green and blue values (or the red, green, and blue monochrome images generally) to create a color image with a good color balance. Additional post processing can be implemented to correct a pixel shift within the monochrome images, thereby ensuring the pixel data within the red, green, and blue monochrome images are compiled in such a way that a given pixel area of the sample is accurately represented in the color image resulting from the compiling process.

In one embodiment, each LED source is energized at the same intensity and for the same period of time, and the monochrome camera is configured to synchronously capture monochrome images using the same exposure time for each color. However, each of the intensity of the LED source, the time period for which the LED source is energized, and the exposure time of the monochrome camera can be adjusted to a desired result. This can be accomplished, for example, by energizing each light source for a defined and potentially different amount of time, or in the case of a rotating disc with an aperture that selectively reveals a light source, rotating the aperture coincident with each light source according to a desired exposure time for each light source. In one instance, the desired result is a color image with good color balance. When combining sequential color images into a color video, it can be advantageous to maximize the monochrome image capture rate, which will reduce a potential lag between video frames. Accordingly, it may be beneficial in some instances to minimize the exposure time for each color. Individual adjustments to the intensity of the LED sources (*e.g*., differentially and specifically increasing the intensity of the red, green, and blue LED sources) can allow the resulting color images to retain a good color balance.

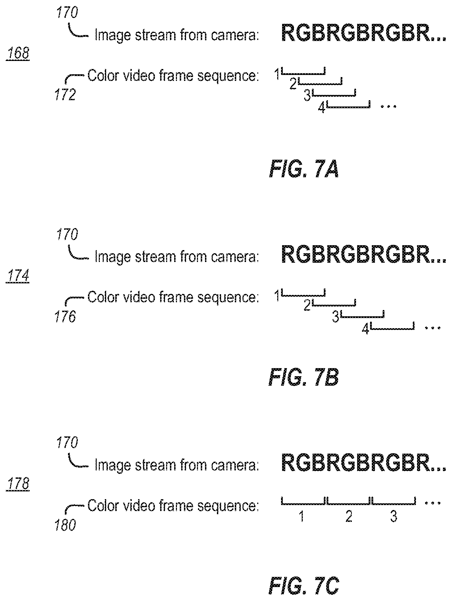

Figure 7A illustrates one paradigm 168 for generating a sequence of color video frames 172 from an image stream 170 of red, green, and blue monochrome images, which does not fall under the scope of the claims. Each monochrome image within the image stream 170 is represented as a letter corresponding to the LED source color used during image acquisition (*i.e.,* "R" for red, "G" for green, and "B" for blue). As illustrated by the image stream 170, the LED sources were selectively energized in a cyclic RGB sequence, resulting in an image stream of "RGBRGBRGBR...". It should be appreciated that other sequences can be used, as described above, or one of the colors can be represented at a different frequency (*e.g*., RGBRGRGB..., RGBGBRGB..., RGBRBRGB..., RGRBRGRB..., RGBGRGBG..., RBGBRBGB..., or similar).

As shown in Figure 7A, a first color video frame within the sequence of color video frames 172 comprises a compilation of the first instances of each component color R, G, and B. The second color video frame is "GBR," a compilation of the green and blue monochrome images from the first color video frame with a more recent red monochrome image. The third color video frame is "BRG," a compilation of the blue monochrome image from the first color video frame, the red monochrome image from the second video frame, and a more recent green monochrome image. This paradigm 168 can be generalized as a compilation of the three most recent component images (*e.g.*, as determined by timestamps associated with each image). As each subsequent monochrome image is received, it is compiled with the two most recent component monochrome images not corresponding to the color of the received monochrome image. As a generic example extrapolated from Figure 7A, a first video frame can be compiled from a first monochrome image corresponding to the first stage of the light sequence, a second monochrome image corresponding to the second stage of the light sequence, and a third monochrome image corresponding to the third stage of the light sequence. A fourth monochrome image corresponding to a repeated first stage of the light sequence can be compiled with the second and third images to generate a second video frame. Likewise, a fifth monochrome image corresponding to a repeated second stage of the light sequence can be compiled with the third and fourth monochrome images to generate a third video frame, and a sixth monochrome image corresponding to a repeated third stage of the light sequence can be compiled with the fourth and fifth monochrome images to generate a fourth video frame.

In some embodiments, the color images received in the image stream 170 can be ordered based upon timestamps associated with each image (i.e. chronologically), in the order received by the monochrome camera, or by identifying a color associated with each received image and placing the image within the next available position for that given color with a defined sequence (e.g. RGBRGBRGB...). The latter can prevent the inadvertent placement of color images within the predefined sequence of component colors based on timing errors or overlapping receipt of multiple images.

The paradigm 168 of Figure 7A can provide a high fidelity, responsive color video with minimal lag. Once the first color video frame is generated, the frame rate for the color video is equivalent to the monochrome image capture rate. However, this paradigm 168 can be more computationally expensive than other color video generation paradigms.

Figure 7B illustrates another paradigm 174 for generating a sequence of color video frames 176 from an image stream 170 of red, green, and blue monochrome images, which is covered by claims 1 and 12. As shown, a first color video frame within the sequence of color video frames 176 comprises a compilation of the first instances of each component color R, G, and B. The second color video frame is "BRG," a compilation of the blue monochrome image from the first color video frame with more recent red and green monochrome images. The third color video frame is "GBR," a compilation of the green monochrome image from the second color video frame with more recent blue and red monochrome images. This paradigm 174 can be generalized as a compilation of composite color images that share at least one monochrome image with at least one other composite color image, or more specifically as a compilation of the oldest component color image with the two most recent component images.

In a general sense, the paradigms 168 and 174 allow for color video frame sequences to be compiled using composite images that share monochrome image data. In an example, which does not fall under the scope of the claims, a first and second video frame can include composite images that share the same two monochrome images but differ with respect to the remaining monochrome image. As a more detailed example, which does not fall under the scope of the claims, a first and second video frame (which are not necessarily chronologically sequential) can include composite images that share the same blue and green monochrome images but which are each made using a different red monochrome image.

The paradigm 174 of Figure 7B can provide a less responsive color video having slightly more lag than the color videos generated under the paradigm 168 of Figure 7A. Once the first color video frame is generated, the frame rate for the color video is equivalent to half the monochrome image capture rate. However, this paradigm 174 can be computationally less expensive than the paradigm 168 of Figure 7A.

Figure 7C illustrates another paradigm 178 for generating a sequence of color video frames 180 from an image stream 170 of red, green, and blue monochrome images, which does not fall under the scope of the claims. As shown, a first color video frame within the sequence of color video frames 176 comprises a compilation of the first instances of each component color R, G, and B. Each subsequent color video frame is similarly "RGB," a compilation of the most recent red, green, and blue monochrome images without using any monochrome image represented within a previous color video frame. This paradigm 174 can be generalized as a compilation of unique triplet RGB images.

The paradigm 178 of Figure 7C provides a less responsive color video with more lag than the color videos generated under the previous paradigms 168, 174 of Figures 7A and 7B. The frame rate for the color video is equivalent to one third of the monochrome image capture rate.

Color cameras include a Bayer filter to ensure each pixel receives only single□ color intensity information at given pixel locations. To create a color image, information on all three colors is required for each pixel location so a demosaicing process is used to interpolate the missing color information at each pixel. This process results in image artifacts where abrupt changes in color occur or along sharp edges present in the sample.

Images resulting from the color image generation outlined in Figures 7A-7C do not suffer from these artifacts, resulting in better image quality for video and captured images for samples not in motion. For samples which are in motion some color banding artifacts may occur during sample movement caused by individual image color component information being more recent in time and therefore in a new position with respect to the other two component colors in the image. These artifacts cannot likely be corrected by changing the number of new images included in the generation of the color image since each component image is always acquired at a slightly different time.

In some embodiments, the color banding artifact can be mitigated by maintaining high camera frame rates, which will keep time differences between frames small (and thus movement differences small). In some embodiments, color banding can be eliminated by keeping the sample still, or it can mitigated using image processing techniques. In one such image processing technique, the underlying offset of each frame in the video can be determined and a compensating offset applied for each color image component when composing the color video frames. This can include, for example, determining the vertical and/or horizontal offset of each video frame in the color video and compensating for the vertical and/or horizontal offset by adjusting the vertical and/or horizontal pixel locations-in whole or in part- within each monochrome image comprising the affected video frames. Compensations such as the these can be beneficial in reducing or ameliorating lag, particularly within embodiments having a slower video frame rate (e.g., as shown and discussed in Figure 7C).

Some colors in resulting color image frames may not be as clearly distinguishable compared to using a color camera. For example, red versus orange and blue versus violet tend to be less distinguishable compared to an image generated from a color camera using a Bayer filter. To help differentiate colors which appear similar under the RGB LED illumination, additional LED colors could also be used to complement the RGB color information.
In the following further embodiments of the claimed method are described.
Selectively energizing each of the plurality of light sources in the sequence may comprise selectively blocking and revealing light originating from each of the plurality of light sources.
Generating the color video from the monochrome images may comprise determining an underlying offset of each video frame in the color video and applying a compensating offset per each monochrome image when compiling each color video frame. Determining the underlying offset may comprise determining one or more of a vertical or horizontal offset amount of each video frame in the color video.
The method may further comprise isolating and viewing a selected monochrome image from the color video.
Furthermore, an imaging system for generating color video is described as an example of hardware with which the system for generating color video from monochrome images according to claim 12 may be used. The imaging system as such is not encompassed by the wording of claim 12 unless the features of claim 12 are present.
The imaging system for generating color video may comprise a light assembly comprising a plurality of light sources arranged about an optical axis of the light assembly, the light assembly configured to selectively energize the plurality of light sources in a sequence; a stage assembly configured to receive a biological sample within a light path of the light assembly; a monochrome camera disposed within the light path and configured to generate monochrome images corresponding to successive stages of the sequence; and an image processor in electrical communication with the monochrome camera, the image processor configured to receive the monochrome images at successive time points and compile the monochrome images into a plurality of video frames to generate a color video.

The plurality of light sources may comprise a plurality of light sets, each light set having a pair of light sources, the light sources of each light set being positioned on opposite sides of the optical axis.

The plurality of light sources may be arranged in a generally circular pattern about the optical axis.

The plurality of light sources may comprise lasers or light emitting diodes (LEDs).

The plurality of light sources may, when combined, generate a white light.

The plurality of light sources in the light assembly may comprise a 617nm light, a 530 nm light, and a 447.5 nm light.

The imaging system may further comprise a microscope objective aligned with the optical axis, and a lens tube aligned with the optical axis.

The imaging system may further comprise a light barrel aligned with the optical axis and positioned so as to encircle the light assembly, the light barrel having a light diffuser positioned therein. The light barrel may additionally comprise a second light diffuser spaced apart from the light diffuser by a distance. The light barrel may additionally comprise a third light diffuser positioned adjacent the second light diffuser and spaced apart from the light diffuser by a second distance. The distance may comprise between about 10 mm - 30 mm, preferably between about 15 mm - 25 mm, more preferably between about 18 mm - 22 mm.

The imaging system may further comprise a fluorophore excitation source configured to produce excitation light directed to the stage assembly to induce fluorophore emission light from the biological sample positioned at the stage assembly.

The sequence may comprise a series of stages with each stage corresponding to selectively energizing a particular wavelength of light.

In an embodiment which does not fall under the scope of the claims, each video frame of the plurality of video frames may comprise a composite color image of at least three monochrome images, and wherein each composite color image shares at least two monochrome images with at least one other composite color image.

In another embodiment not falling under the scope of the claims, the color video may comprise a live color video having a color video frame rate matching a frame rate output of the monochrome camera.

The stage assembly may further be configured to move the biological sample within the light path of the light assembly.

The color video may be a near-real-time color video. The near-real-time color video has a time lag, and wherein the time lag is less than 5 seconds, preferably less than 2 seconds, more preferably less than 1 second, even more preferably less than 0.5 seconds.

The color video may be a real-time color video. The real-time color video may not have a noticeable time lag. The real-time color video may not include a visual loss of image data. The visual loss of image data may comprise color banding artifacts. The visual loss of image data may comprise a lack of color balancing.

The color video may have a frame rate of at least 6 frames per second, preferably of at least 12 frames pre second, more preferably of at least 18 frames per second, even more preferably of at least 24 frames per second.

The system may be configured to generate the monochrome images and to generate the color video while manipulating the biological sample. The system may be configured to manipulate the biological sample by movement of the stage assembly upon which the sample is positioned. The movement may comprise movement in two dimensions. The color video may additionally be displayed on a user display device while the biological sample is manipulated.

The system may be configured to generate the monochrome images and to generate the color video while focusing the biological sample. The system may be configured to allow a user to focus the biological sample. The system may comprise one or more processors; and one or more computer readable media having stored thereon computer-executable instructions that are executable by the one or more processors to cause the system to perform at least the following: focusing the biological sample while continuing to generate the color video.

The system may comprise a user display device, and wherein the system is configured to display the color video on the user display device while focusing the biological sample.

The system may be configured to generate the monochrome images and to generate the color video while the system adjusts one or more illumination conditions of the light assembly. The one or more illumination conditions adjusted by the system may comprise adjustment of one or more lighting condensers, adjustment of one or more light diffusers, adjustment of a wavelength of the one or more light sources, adjustment of a time period that one or more of the one or more light sources are energized, adjustment of a blocking of light from one or more of the one or more light sources, or adjustment of a revealing of light from one or more of the one or more light sources. The system may comprise a user display device, and wherein the system is configured to display the color video on the user display device while the system adjusts the one or more illumination conditions of the light assembly.

The color video may be at least in part a z-stack video.

The system may be configured to generate the color video while obtaining z-stack images from the monochrome images.

Furthermore, a method for generating monochrome and color videos with a monochrome camera is described as a non-claimed additional operating mode. The method according to claim 1 may be combined with generating a monochrome video in response to a request, provided that the features of claim 1 are present.

The method for generating monochrome and color videos with a monochrome camera may comprise generating a color video, wherein generating the color video comprises: selectively energizing each of a plurality of light sources in a sequence, the sequence having a series of stages with each stage of the sequence corresponding to activation of a different wavelength of light from one or more light sources to illuminate a sample; capturing a monochrome image of the illuminated sample at a monochrome camera at each stage of the sequence; and compiling a plurality of monochrome images into a series of color video frames comprising the color video; and in response to a request, generating a monochrome video of the sample, wherein generating the monochrome video comprises compiling a plurality of monochrome images captured at the monochrome camera with a single light source into a series of monochrome video frames comprising the monochrome video. Generating the monochrome video may further comprise continuously energizing the single light source to illuminate the sample.

Generating the monochrome video may further comprise selectively receiving monochrome images associated with a single stage of the sequence, the single stage of the sequence corresponding to selectively energizing the single light source within the sequence.

The method may further comprise generating a second monochrome video in response to a second request. Generating the second monochrome video may comprise compiling a second plurality of monochrome images captured with the monochrome camera at a second light source into a second series of monochrome video frames comprising the second monochrome video.

The method may further comprise resuming generation of the color video in response to a subsequent request.

Furthermore, a system for generating monochrome and color videos with a monochrome camera is described as contextual disclosure. This system as such is not encompassed by the wording of the claims. A system according to claim 12 may additionally be configured to switch from generating the claimed color video to generating a monochrome video in response to a request and to resume generating the claimed color video in response to a subsequent request, provided that all features of claim 12 are present.

The system for generating monochrome and color videos with a monochrome camera may comprise one or more processors; and one or more computer readable media having stored thereon computer-executable instructions that are executable by the one or more processors to cause the system to perform at least the following: generate a color video, wherein generating the color video causes the system to: selectively energize each of a plurality of light sources in a sequence, the sequence having a series of stages with each stage of the sequence corresponding to activation of a different wavelength of light from one or more light sources to illuminate a sample; capture a monochrome image of the illuminated sample at a monochrome camera at each stage of the sequence; and compile a plurality of monochrome images into a series of color video frames comprising the color video; receive a request for a monochrome video of the sample; and generate a monochrome video in response to receiving the request, wherein generating the monochrome video causes the system to compile a plurality of monochrome images captured at the monochrome camera with a single light source into a series of monochrome video frames comprising the monochrome video.

Generating the monochrome video may further cause the system to continuously energize the single light source to illuminate the sample.

Generating the monochrome video may further cause the system to selectively receive monochrome images associated with a single stage of the sequence, the single stage of the sequence corresponding to selectively energizing the single light source within the sequence.

The instructions may additionally cause the system to generate a second monochrome video in response to a second request. Generating the second monochrome video may cause the system to compile a second plurality of monochrome images captured with the monochrome camera at a second light source into a second series of monochrome video frames comprising the second monochrome video.

The instructions may additionally cause the system to resume generating the color video in response to a subsequent request.

In the following, general features for methods described herein are described.

The color video may be a near-real-time color video. The near-real-time color video may have a time lag, and wherein the time lag is less than 5 seconds, preferably less than 2 seconds, more preferably less than 1 second, even more preferably less than 0.5 seconds.

The color video may be a real-time color video. The real-time color video may not have a noticeable time lag.

The real-time color video may not include a visual loss of image data. The visual loss of image data may comprise color banding artifacts. The visual loss of image data may comprise a lack of color balancing.

The color video may have a frame rate of at least 6 frames per second, preferably of at least 12 frames per second, more preferably of at least 18 frames per second, even more preferably 24 frames per second.

The monochrome images may be captured and the color video may be generated while manipulating the sample. The sample may be manipulated by movement of a stage assembly upon which the sample is positioned. The movement may comprise movement in two dimensions.

The color video may additionally be displayed on a user display device while the sample is manipulated.

The monochrome images may be captured and the color video may be generated while focusing the sample. The sample may be focused by a user. The sample may be focused automatically by a computing device.

The color video may additionally be displayed on a user display device while focusing the sample.

The monochrome images may be captured and the color video may be generated while adjusting one or more illumination conditions. Adjusting the one or more illumination conditions may comprise adjusting one or more lighting condensers, adjusting one or more light diffusers, adjusting a wavelength of the one or more light sources, adjusting a time period that one or more of the one or more light sources are energized, adjusting a blocking of light from one or more of the one or more light sources, or adjusting a revealing of light from one or more of the one or more light sources.

The color video may additionally be displayed on a user display device while adjusting the one or more illumination conditions.

The color video may at least in part be a z-stack video.

The color video may be generated while z-stack images are obtained from the monochrome images.

In the following further embodiments of the claimed system for generating color video from monochrome images captured with a monochrome image capture rate are described.

The instructions may additionally cause the system to determine an underlying offset of each color video frame in the color video and apply a compensating offset per each monochrome image when compiling each color video frame. Determining the underlying offset may cause the system to determine one or more of a vertical or horizontal offset amount of each video frame in the color video.

The systems and methods disclosed herein beneficially enable the dynamic generation of monochrome videos. For example, in response to a user request, color video generation (and display) can be switched to monochrome video generation (and display) by energizing a single LED source and capturing images at the monochrome camera equivalent to the exposure rate associated with that color. Monochrome video frames are compiled using each subsequently received monochrome image. A color video can be resumed on demand. Upon receiving a request for color video, the light assembly resumes selectively energizing the light sources in a sequence. The first color video frame can include as one component the last monochrome image taken within the monochrome video and compile the color video frames according to the paradigms discussed above or variations thereof.

It is to be understood that features described with regard to the various embodiments herein may be mixed and matched in any desired combination. In addition, the concepts disclosed or envisioned herein may be embodied in other specific forms. The described embodiments are to be considered in all respects only as illustrative and not restrictive. The scope is, therefore, indicated by the appended claims rather than by the foregoing description.

## Claims

1. A method for generating color video with a monochrome camera (114), comprising:
selectively energizing each of a plurality of light sources (118, 118a, 118b, 118c) in a sequence, the sequence having a series of stages with each stage of the sequence corresponding to activation of a different wavelength of light from one or more light sources (118, 118a, 118b, 118c) to illuminate a sample (109);
capturing a monochrome image of the illuminated sample (109) at a monochrome camera (114) at each stage of the sequence; and
generating a color video from the monochrome images (170) captured with a monochrome image capture rate, wherein generating the color video comprises:
compiling a first video frame, wherein a composite color image of the first video frame comprises a first monochrome image associated with a first wavelength of light in a first cycle of the sequence, a second monochrome image associated with a second wavelength of light in the first cycle of the sequence, and a third monochrome image associated with a third wavelength of light in the first cycle of the sequence; and
compiling a second video frame, the second video frame being chronologically after the first video frame, wherein a composite color image of the second video frame comprises the third monochrome image, a fourth monochrome image associated with the first wavelength of light in a second cycle of the sequence and a fifth monochrome image associated with the second wavelength of light in the second cycle of the sequence,
wherein the color video has a frame rate and wherein, once the first color video frame is generated, the frame rate for the color video is equivalent to half the monochrome image capture rate.

2. The method of claim 1, further comprising assigning a color to the monochrome image based on the corresponding different wavelength of light at each stage of the sequence.

3. The method of claim 1 or claim 2, wherein selectively energizing each of the plurality of light sources in the sequence comprises energizing each of the plurality of light sources for a predefined period of time, preferably wherein the predefined period of time is a same period of time for at least two stages of the sequence or wherein the predefined period of time is a different period of time for at least two stages of the sequence, the at least two stages having one or more corresponding light sources selectively energized at a same intensity.

4. The method of claim 1 to claim 3, wherein selectively energizing each of the plurality of light sources in the sequence comprises energizing each of the plurality of light sources with a predefined intensity, preferably, wherein the predefined intensity is different for each of the plurality of light sources.

5. The method of claim 4, further comprising color balancing the color video, preferably,
wherein color balancing the color video comprises automatically or manually adjusting the predefined intensity for one or more of the plurality of light sources, or
wherein color balancing the color video comprises automatically or manually adjusting one or more of a red channel, a green channel, or a blue channel until the color video of a white sample appears white, or
wherein color balancing the color video comprises automatically or manually adjusting a predefined intensity by which one or more of the plurality of light sources are selectively energized in the sequence.

6. The method of claim 1, wherein the sequence comprises a repeated cyclic sequence.

7. The method of claims 1-6, wherein the first, second, and third wavelengths of light comprise different wavelengths of light selected from a red light, a green light, and a blue light.

8. The method of claims 1 to 7, wherein each monochrome image comprises a timestamp.

9. The method of claim 8, wherein compiling the sequence of video frames comprises generating a most recent video frame within the sequence of video frames, the most recent video frame comprising first, second, and third monochrome images having a most recent timestamp.

10. The method of claims 1 to 9, wherein the first wavelength of light in the first cycle of the sequence is a same first wavelength of light as the first wavelength of light in the second cycle of the sequence.

11. The method of claims 1 to 10, wherein the second wavelength of light in the first cycle of the sequence is a same second wavelength of light as the second wavelength of light in the second cycle of the sequence.

12. A system for generating color video from monochrome images (170) captured with a monochrome image capture rate, comprising:
one or more processors; and
one or more computer readable media having stored thereon computer-executable instructions that are executable by the one or more processors to cause the system to perform at least the following:
receive a first monochrome image corresponding to a first stage of a sequence; receive a second monochrome image corresponding to a second stage of the sequence;
receive a third monochrome image corresponding to a third stage of the sequence;
receive a fourth monochrome image corresponding to a repeated first stage of the sequence;
receive a fifth monochrome image corresponding to a repeated second stage of the sequence; and
receive a sixth monochrome image corresponding to a repeated third stage of the sequence;
compile a first color video frame comprising the first, second, and third monochrome images; and
generate a color video comprising the first color video frame, wherein the instructions additionally cause the system to compile a second color video frame comprising the third, fourth, and fifth monochrome images, the color video comprising the first and second color video frames, wherein the color video has a frame rate and wherein, once the first color video frame is generated, the frame rate for the color video is equivalent to half the monochrome image capture rate.

## Patentansprüche

1. Verfahren zum Erzeugen von Farbvideos mit einer Monochromkamera (114), umfassend:
selektives Energetisieren jeder einer Mehrzahl von Lichtquellen (118, 118a, 118b, 118c) in einer Sequenz, wobei die Sequenz eine Reihe von Stufen aufweist, wobei jede Stufe der Sequenz einer Aktivierung einer unterschiedlichen Lichtwellenlänge von einer oder mehreren Lichtquellen (118, 118a, 118b, 118c) entspricht, um eine Probe (109) zu beleuchten;
Erfassen eines Monochrombilds der beleuchteten Probe (109) an einer Monochromkamera (114) in jeder Stufe der Sequenz; und
Erzeugen eines Farbvideos aus den Monochrombildern (170), die mit einer Monochrombilderfassungsrate erfasst werden, wobei das Erzeugen des Farbvideos umfasst:
Kompilieren eines ersten Videoframes, wobei ein zusammengesetztes Farbbild des ersten Videoframes ein erstes Monochrombild, das einer ersten Lichtwellenlänge in einem ersten Zyklus der Sequenz zugeordnet ist, ein zweites Monochrombild, das einer zweiten Lichtwellenlänge in dem ersten Zyklus der Sequenz zugeordnet ist, und ein drittes Monochrombild, das einer dritten Lichtwellenlänge in dem ersten Zyklus der Sequenz zugeordnet ist, umfasst; und
Kompilieren eines zweiten Videoframes, wobei der zweite Videoframe chronologisch nach dem ersten Videoframe liegt, wobei ein zusammengesetztes Farbbild des zweiten Videoframes das dritte Monochrombild, ein viertes Monochrombild, das der ersten Lichtwellenlänge in einem zweiten Zyklus der Sequenz zugeordnet ist, und ein fünftes Monochrombild, das der zweiten Lichtwellenlänge in dem zweiten Zyklus der Sequenz zugeordnet ist, umfasst,
wobei das Farbvideo eine Framerate aufweist und wobei, sobald der erste Farbvideoframe erzeugt ist, die Framerate für das Farbvideo äquivalent zu einer Hälfte der Monochrombilderfassungsrate ist.

2. Verfahren nach Anspruch 1, ferner umfassend ein Zuweisen einer Farbe zum Monochrombild basierend auf der entsprechenden unterschiedlichen Lichtwellenlänge in jeder Stufe der Sequenz.

3. Verfahren nach Anspruch 1 oder 2, wobei das selektive Energetisieren jeder der Mehrzahl von Lichtquellen in der Sequenz das Energetisieren jeder der Mehrzahl von Lichtquellen für eine vordefinierte Zeitspanne umfasst, vorzugsweise wobei die vordefinierte Zeitspanne eine gleiche Zeitspanne für mindestens zwei Stufen der Sequenz ist oder wobei die vordefinierte Zeitspanne eine unterschiedliche Zeitspanne für mindestens zwei Stufen der Sequenz ist, wobei die mindestens zwei Stufen eine oder mehrere entsprechende Lichtquellen, die selektiv mit einer gleichen Intensität energetisiert werden, aufweisen.

4. Verfahren nach Anspruch 1 bis 3, wobei das selektive Energetisieren jeder der Mehrzahl von Lichtquellen in der Sequenz das Energetisieren jeder der Mehrzahl von Lichtquellen mit einer vordefinierten Intensität umfasst, vorzugsweise, wobei die vordefinierte Intensität für jede der Mehrzahl von Lichtquellen unterschiedlich ist.

5. Verfahren nach Anspruch 4, ferner umfassend ein Farbabgleichen des Farbvideos, vorzugsweise,
wobei das Farbabgleichen des Farbvideos ein automatisches oder manuelles Einstellen der vordefinierten Intensität für eine oder mehrere der Mehrzahl von Lichtquellen umfasst, oder
wobei das Farbabgleichen des Farbvideos das automatische oder manuelle Einstellen eines oder mehrerer von einem Rotkanal, einem Grünkanal oder einem Blaukanal umfasst, bis das Farbvideo einer weißen Probe weiß erscheint, oder
wobei das Farbabgleichen des Farbvideos das automatische oder manuelle Einstellen einer vordefinierten Intensität umfasst, mit der eine oder mehrere der Mehrzahl von Lichtquellen in der Sequenz selektiv energetisiert werden.

6. Verfahren nach Anspruch 1, wobei die Sequenz eine wiederholte zyklische Sequenz umfasst.

7. Verfahren nach den Ansprüchen 1 bis 6, wobei die erste, die zweite und die dritte Lichtwellenlänge unterschiedliche Lichtwellenlängen, die aus einem roten Licht, einem grünen Licht und einem blauen Licht ausgewählt sind, umfassen.

8. Verfahren nach den Ansprüchen 1 bis 7, wobei jedes Monochrombild einen Zeitstempel umfasst.

9. Verfahren nach Anspruch 8, wobei das Kompilieren der Sequenz von Videoframes das Erzeugen eines aktuellsten Videoframes innerhalb der Sequenz von Videoframes umfasst, der aktuellste Videoframe umfassend das erste, das zweite und das dritte Monochrombild, die einen aktuellsten Zeitstempel aufweisen.

10. Verfahren nach den Ansprüchen 1 bis 9, wobei die erste Lichtwellenlänge in dem ersten Zyklus der Sequenz eine gleiche erste Lichtwellenlänge wie die erste Lichtwellenlänge in dem zweiten Zyklus der Sequenz ist.

11. Verfahren nach den Ansprüchen 1 bis 10, wobei die zweite Lichtwellenlänge in dem ersten Zyklus der Sequenz eine gleiche zweite Lichtwellenlänge wie die zweite Lichtwellenlänge in dem zweiten Zyklus der Sequenz ist.

12. System zum Erzeugen von Farbvideos aus Monochrombildern (170), die mit einer Monochrombilderfassungsrate erfasst werden, umfassend:
einen oder mehrere Prozessoren; und
ein oder mehrere computerlesbare Medien, die darauf gespeicherte computerausführbare Anweisungen aufweisen, die durch den einen oder die mehreren Prozessoren ausführbar sind, um das System zu veranlassen, mindestens das Folgende durchzuführen:
Empfangen eines ersten Monochrombilds, das einer ersten Stufe einer Sequenz entspricht;
Empfangen eines zweiten Monochrombilds, das einer zweiten Stufe der Sequenz entspricht;
Empfangen eines dritten Monochrombilds, das einer dritten Stufe der Sequenz entspricht;
Empfangen eines vierten Monochrombilds, das einer wiederholten ersten Stufe der Sequenz entspricht;
Empfangen eines fünften Monochrombilds, das einer wiederholten zweiten Stufe der Sequenz entspricht; und
Empfangen eines sechsten Monochrombilds, das einer wiederholten dritten Stufe der Sequenz entspricht;
Kompilieren eines ersten Farbvideoframes, umfassend das erste, das zweite und das dritte Monochrombild; und
Erzeugen eines Farbvideos, umfassend den ersten Farbvideoframe, wobei die Anweisungen das System zusätzlich veranlassen, einen zweiten Farbvideoframe, umfassend das dritte, das vierte und das fünfte Monochrombild, zu kompilieren, das Farbvideo umfassend den ersten und den zweiten Farbvideoframe, wobei das Farbvideo eine Framerate aufweist und wobei, sobald der erste Farbvideoframe erzeugt ist, die Framerate für das Farbvideo äquivalent zur Hälfte der Monochrombilderfassungsrate ist.

## Revendications

1. Procédé de génération d'une vidéo en couleur avec une caméra monochrome (114), comprenant :
l'alimentation sélective en énergie de chacune parmi une pluralité de sources de lumière (118, 118a, 118b, 118c) dans une séquence, la séquence ayant une série de phases, chaque phase de la séquence correspondant à une activation d'une longueur d'onde différente de lumière provenant d'une ou plusieurs sources de lumière (118, 118a, 118b, 118c) pour éclairer un échantillon (109) ;
la capture d'une image monochrome de l'échantillon éclairé (109) sur une caméra monochrome (114) à chaque phase de la séquence ; et
la génération d'une vidéo en couleur à partir des images monochromes (170) capturées avec une fréquence de capture d'images monochromes, dans lequel la génération de la vidéo en couleur comprend :
la compilation d'une première trame vidéo, dans lequel une image en couleur composite de la première trame vidéo comprend une première image monochrome associée à une première longueur d'onde de lumière dans un premier cycle de la séquence, une deuxième image monochrome associée à une deuxième longueur d'onde de lumière dans le premier cycle de la séquence et une troisième image monochrome associée à une troisième longueur d'onde de lumière dans le premier cycle de la séquence ; et
la compilation d'une seconde trame vidéo, la seconde trame vidéo étant chronologiquement après la première trame vidéo, dans lequel une image en couleur composite de la seconde trame vidéo comprend la troisième image monochrome, une quatrième image monochrome associée à la première longueur d'onde de lumière dans un second cycle de la séquence et une cinquième image monochrome associée à la deuxième longueur d'onde de lumière dans le second cycle de la séquence,
dans lequel la vidéo en couleur a une fréquence de trames et dans lequel, une fois que la première trame vidéo en couleur est générée, la fréquence de trames pour la vidéo en couleur est équivalente à la moitié de la fréquence de capture d'images monochromes.

2. Procédé selon la revendication 1, comprenant en outre l'attribution d'une couleur à l'image monochrome en fonction de la longueur d'onde différente correspondante de lumière à chaque phase de la séquence.

3. Procédé selon la revendication 1 ou la revendication 2, dans lequel l'alimentation sélective en énergie de chacune parmi la pluralité de sources de lumière dans la séquence comprend l'alimentation en énergie de chacune parmi la pluralité de sources de lumière pendant un laps de temps prédéfini, de préférence dans lequel le laps de temps prédéfini est un même laps de temps pour au moins deux phases de la séquence ou dans lequel le laps de temps prédéfini est un laps de temps différent pour au moins deux phases de la séquence, les au moins deux phases ayant une ou plusieurs sources de lumière correspondantes alimentées sélectivement en énergie à une même intensité.

4. Procédé selon la revendication 1 à la revendication 3, dans lequel l'alimentation sélective en énergie de chacune parmi la pluralité de sources de lumière dans la séquence comprend l'alimentation en énergie de chacune parmi la pluralité de sources de lumière avec une intensité prédéfinie, de préférence, dans lequel l'intensité prédéfinie est différente pour chacune parmi la pluralité de sources de lumière.

5. Procédé selon la revendication 4, comprenant en outre l'équilibrage des couleurs de la vidéo en couleur, de préférence, dans lequel l'équilibrage des couleurs de la vidéo en couleur comprend l'ajustement automatique ou manuel de l'intensité prédéfinie pour une ou plusieurs parmi la pluralité de sources de lumière, ou
dans lequel l'équilibrage des couleurs de la vidéo en couleur comprend l'ajustement automatique ou manuel d'un ou plusieurs parmi un canal rouge, un canal vert ou un canal bleu jusqu'à ce que la vidéo en couleur d'un échantillon blanc apparaisse blanche, ou
dans lequel l'équilibrage des couleurs de la vidéo en couleur comprend l'ajustement automatique ou manuel d'une intensité prédéfinie avec laquelle une ou plusieurs parmi la pluralité de sources de lumière sont alimentées sélectivement en énergie dans la séquence.

6. Procédé selon la revendication 1, dans lequel la séquence comprend une séquence cyclique répétée.

7. Procédé selon les revendications 1 à 6, dans lequel les première, deuxième et troisième longueurs d'onde de lumière comprennent des longueurs d'onde différentes de lumière choisies parmi une lumière rouge, une lumière verte et une lumière bleue.

8. Procédé selon les revendications 1 à 7, dans lequel chaque image monochrome comprend un horodatage.

9. Procédé selon la revendication 8, dans lequel la compilation de la séquence de trames vidéo comprend la génération d'une trame vidéo la plus récente au sein de la séquence de trames vidéo, la trame vidéo la plus récente comprenant des première, deuxième et troisième images monochromes ayant un horodatage le plus récent.

10. Procédé selon les revendications 1 à 9, dans lequel la première longueur d'onde de lumière dans le premier cycle de la séquence est une même première longueur d'onde de lumière que la première longueur d'onde de lumière dans le second cycle de la séquence.

11. Procédé selon les revendications 1 à 10, dans lequel la deuxième longueur d'onde de lumière dans le premier cycle de la séquence est une même deuxième longueur d'onde de lumière que la deuxième longueur d'onde de lumière dans le second cycle de la séquence.

12. Système de génération d'une vidéo en couleur à partir d'images monochromes (170) capturées avec une fréquence de capture d'images monochromes, comprenant :
un ou plusieurs processeurs ; et
un ou plusieurs supports lisibles par ordinateur sur lesquels sont stockées des instructions exécutables par ordinateur qui sont exécutables par le ou les processeurs pour amener le système à mettre en œuvre au moins ce qui suit :
recevoir une première image monochrome correspondant à une première phase d'une séquence ;
recevoir une deuxième image monochrome correspondant à une deuxième phase de la séquence ;
recevoir une troisième image monochrome correspondant à une troisième phase de la séquence ;
recevoir une quatrième image monochrome correspondant à une première phase répétée de la séquence ;
recevoir une cinquième image monochrome correspondant à une deuxième phase répétée de la séquence ; et
recevoir une sixième image monochrome correspondant à une troisième phase répétée de la séquence ;
compiler une première trame vidéo en couleur comprenant les première, deuxième et troisième images monochromes ; et
générer une vidéo en couleur comprenant la première trame vidéo en couleur, dans lequel les instructions amènent en outre le système à compiler une seconde trame vidéo en couleur comprenant les troisième, quatrième et cinquième images monochromes, la vidéo en couleur comprenant les première et seconde trames vidéo en couleur, dans lequel la vidéo en couleur a une fréquence de trames et dans lequel, une fois que la première trame vidéo en couleur est générée, la fréquence de trames pour la vidéo en couleur est équivalente à la moitié de la fréquence de capture d'images monochromes.
